# EUROPÄISCHE PATENTSCHRIFT

(11) **EP 3 416 891 B1**
(45) Veröffentlichungstag und Bekanntmachung des Hinweises auf die Patenterteilung: **28.10.2020**
(21) Anmeldenummer: 17706203.1
(22) Anmeldetag: 17.02.2017
(51) Int. Cl.: B65B 3/00, A61J 3/00

(54) **ANLAGE ZUR HERSTELLUNG EINER MEDIZINISCHEN ZUBEREITUNG**
PLANT FOR PRODUCING A MEDICAL PREPARATION
PROCEDE DE FABRICATION D'UNE PREPARATION MEDICAMENTEUSE

(30) Priorität: 19.02.2016 EP 16156529; 09.06.2016 EP 16173695
(43) Veröffentlichungstag der Anmeldung: 26.12.2018
(73) Patentinhaber: Fresenius Kabi Deutschland GmbH, 61352 Bad Homburg (DE)
(72) Erfinder: BIEHL, Martin, 66606 St. Wendel (DE); HOCK, Michael, 35516 Münzenberg (DE); SCHAAKE, Henrik, 61348 Bad Homburg (DE); GABRIEL, Stephan, 06844 Dessau-Rosslau (DE); BAECKE, Martin, 06847 Dessau (DE)
(74) Vertreter: Fresenius Kabi Deutschland GmbH
(86) Internationale Anmeldenummer: PCT/EP2017/053627
(87) Internationale Veröffentlichungsnummer: WO 2017/140850

(56) Entgegenhaltungen:
- US-A- 3 647 118
- US-A- 5 313 992
- US-A- 5 697 407

## Beschreibung

### Gebiet der Erfindung

Die Erfindung betrifft eine Anlage zur Herstellung einer medizinischen Zubereitung. Insbesondere betrifft die Erfindung eine Anlage, mit der z.B. Infusionsbeutel und/oder Spritzen zur parenteralen Ernährung befüllt werden.

### Hintergrund der Erfindung

Anlagen zur Herstellung einer medizinischen Zubereitung, insbesondere zur Herstellung einer Zubereitung zur parenteralen Ernährung, werden z.B. in Apotheken oder Kliniken verwendet, um eine patientenspezifische Zubereitung, insbesondere ein Gemisch aus verschiedenen Grundnahrungsstoffen, Spurenelementen und Vitaminen, ggf. auch zusammen mit einem Arzneimittel, abzufüllen.

US 5 313 992 offenbart ein Schlauch-Transfer-Set für Compounding-Flüssigkeiten.

Derartige Anlagen werden auch als TPN-Compounder (TPN = Total Parenteral Nutrition) bezeichnet. Aus der Praxis bekannte und im Markt befindliche Anlagen, wie beispielsweise das System MultiComp® der Firma Fresenius, umfassen eine computergesteuerte Pumpeneinheit, mit der die Bestandteile der Zusammensetzung aus verschiedenen Quellbehältern in einen auf einer Waage befindlichen Zielbehälter überführt werden. Zumindest in dem Fall, dass nicht für jeden Quellbehälter eine separate Pumpe vorhanden ist, ist es notwendig, das Zudosieren aus verschiedenen Quellbehältern über Ventile zu steuern.

Aufgrund der in der Regel erforderlichen Vielzahl an Quellbehältern sind auch dementsprechend viele Ventile notwendig. Sofern die Ventile in einer zentralen Einheit zusammengefasst werden, geht dies mit einem entsprechend großen Bauraum und Aufwand sowohl für die Ventileinheit als auch für die erforderlichen anlagenseitigen Antriebe der Ventile einher.

### Aufgabe der Erfindung

Der Erfindung liegt demgegenüber die Aufgabe zugrunde, eine einfach, kompakt und sicher ausgebildete Anlage zur Herstellung einer medizinischen Zubereitung bereitzustellen. Insbesondere soll die Anlage über eine kompakt ausgebildete Antriebseinheit zur Ventilsteuerung verfügen.

### Zusammenfassung der Erfindung

Die Aufgabe der Erfindung wird durch eine Anlage zur Herstellung einer medizinischen Zubereitung, insbesondere einer Anlage zur Herstellung einer Zubereitung zur parenteralen Ernährung, nach einem der unabhängigen Ansprüche gelöst.

Bevorzugte Ausführungsformen und Weiterbildungen der Erfindung sind den jeweils abhängigen Ansprüchen, der Beschreibung sowie den Figuren zu entnehmen.

Die Erfindung betrifft eine Anlage zur Herstellung einer medizinischen Zubereitung. Insbesondere betrifft die Erfindung eine Anlage, mit der z.B. als Infusionsbeutel oder als Spritze ausgebildete Zielbehälter mit einer Mehrzahl von Flüssigkeiten befüllt werden, welche einer Vielzahl von Quellbehältern entnommen werden.

Es werden also aus einer Vielzahl von Quellbehältern Flüssigkeiten in einen Zielbehälter transferiert.

Hierzu weist die Anlage zumindest eine Pumpe auf. Denkbar ist die Verwendung genau einer einzigen Pumpe, welche über Ventile aus einer Mehrzahl aus Quellbehältern die gewünschten Bestandteile entnimmt. Die Pumpe ist strömungsseitig nach dem Ventilblock (siehe dazu nachfolgend) angeordnet.

Denkbar ist aber auch die Verwendung mehrerer Pumpen, beispielsweise einer Pumpe für das Zudosieren der Hauptbestandteile der medizinischen Zubereitung, welche in größerer Menge entnommen werden und einer weiteren Pumpe, mit der Mikromengen, wie beispielsweise Vitamine und/oder Spurenelemente enthaltende Flüssigkeiten, entnommen werden.

Vorzugsweise wird genau eine einzige Pumpe verwendet, da so auf besonders einfache Weise sämtliche Ventile mit einem einzigen Auslass verbunden sein können.

Die Pumpe ist vorzugsweise als Peristaltikpumpe, beispielsweise als Schlauchpumpe, insbesondere Rollenpumpe oder Fingerpumpe, ausgebildet. Bei derartigen Pumpen wird das Medium durch periodisches Zusammendrücken eines Schlauchs gefördert. Diese ermöglicht unter anderem, dass der Auslauf eines Ventilblocks mit einem Schlauch verbunden ist, welcher in die Schlauchpumpe eingelegt ist. Das zu fördernde Medium kommt so nicht mit Teilen der Pumpe in Kontakt.

Ein Ventilblock der Anlage, welcher eine Vielzahl von Ventilen enthält, kann so beispielsweise zusammen mit dem Schlauch als Einweg-Bauteil verwendet werden. Dieses wird nach einer bestimmten Zeit und/oder nach dem Transferieren einer bestimmten Menge an Flüssigkeit ausgetauscht. Die Flüssigkeit kommt so beim Transferieren mittels der Anlage nur mit Bestandteilen dieses Einweg-Bauteils, nicht aber mit weiteren, dauerhaft verwendeten Bauteilen in Kontakt.

Unter einem Ventilblock wird ein Gehäuse verstanden, welches eine Vielzahl von Ventilen umfasst. Dies kann beispielsweise quaderförmig ausgebildet sein. Die Ventile können in dem Gehäuse zumindest zwei Reihen bilden.

Vorzugsweise enthält der Ventilblock zumindest vier, besonders bevorzugt zumindest acht und ganz besonders bevorzugt zumindest zwölf Anschlüsse, an denen die Quellbehälter jeweils mit einem Schlauch angeschlossen werden können.

Die Ventile umfassen Betätigungsorgane, mit denen die Ventile geöffnet und geschlossen werden können. Bei den Betätigungsorganen kann es sich insbesondere um Küken handeln.

Der Ventilblock ist auf eine anlagenseitige Aufnahme aufsetzbar. Insbesondere wird der Ventilblock auf eine als Trägerplatte ausgestaltete Aufnahme aufgerastet.

Die Betätigungsorgane der Ventile sind über Mitnehmer der Anlage betätigbar.

Die Mitnehmer der Anlage bilden in einer Ausführungsform ein Formschlusselement für die Betätigungsorgane der Ventile. Sie können durch eine Drehbewegung das jeweilige Ventil öffnen und schließen.

Die Anlage weist eine Vielzahl an Mitnehmern auf. Vorzugsweise besitzt die Anlage zumindest drei Mitnehmer, besonders bevorzugt sechs oder zumindest sechs Mitnehmer. In einer Ausführungsform ist jedem Betätigungsorgan des Ventilblocks jeweils ein Mitnehmer der Anlage zugeordnet. Die Anzahl der Mitnehmer kann zum Beispiel der Anzahl der Betätigungsorgane entsprechen.

Gemäß der Erfindung sind die Mitnehmer gegeneinander versetzt angeordnet.

Entsprechend sind beim Ventilblock auch die Betätigungsorgane der Ventile gegeneinander versetzt angeordnet.

Die Betätigungsorgane liegen in einer Draufsicht gesehen insbesondere in zumindest zwei, vorzugsweise geraden, Reihen, in welchen die Betätigungsorgane versetzt zueinander angeordnet sind. Die in einer Reihe angeordneten Betätigungsorgane sind zu den in der anderen Reihe angeordneten Betätigungsorganen axial versetzt positioniert. Vorzugsweise sind pro Reihe zumindest zwei oder zumindest drei Mitnehmer angeordnet.

Die Mitnehmer und die Betätigungsorgane der Ventile liegen also, bezogen auf die Haupterstreckungsrichtung eines Ventilblocks nicht paarweise gegenüber.

In einer Draufsicht auf den Ventilblock gesehen, bilden die Betätigungsorgane also keine Anordnung, bei denen sich virtuelle Geraden, welche die Betätigungsorgane verbinden, in einem rechten Winkel schneiden.

Vielmehr sind die Mitnehmer der Anlage und die Betätigungsorgane vorzugsweise nach dem Prinzip der hexagonal dichtesten Packung, aber voneinander beabstandet, angeordnet.

Insbesondere sind die Mitnehmer und die Betätigungsorgane in zumindest zwei Reihen angeordnet, entlang derer die Betätigungsorgane vorzugsweise im Wesentlichen auf einer Geraden liegen. Vorzugsweise sind die Mitnehmer und die Betätigungsorgane in einer Reihe um etwa die Hälfte ihres jeweiligen Abstands gegenüber den Mitnehmern und den Betätigungsorganen der anderen Reihe versetzt angeordnet.

Vorzugsweise umfasst die Anlage eine Antriebseinheit mit Motoren, wobei die Motoren in zumindest zwei zueinander verschobenen Reihen angeordnet sind. Dies ermöglicht anlagenseitig eine kompaktere Ausgestaltung.

Insbesondere können die Motoren auch, entsprechend dem Prinzip der hexagonal dichtesten Packung, so angeordnet sein, dass entlang der Reihen die Gehäuse der Motoren ineinandergreifend angeordnet sind.

Vorzugsweise verfügen die Motoren über im Wesentlichen kreiszylindrisch ausgebildete Gehäuse, welche so näher aneinandergerückt werden können.

Bei einer Ausgestaltung der Erfindung umfassen die Ventile des Ventilblocks jeweils zumindest einen Auslass zu einem Sammelkanal. Der Sammelkanal ist vorzugsweise Teil des Ventilblocks. Insbesondere ist der Sammelkanal ein zentraler Kanal in einem als Kunststoffspritzgussteil ausgebildeten Ventilblock.

Dadurch, dass sich die Ventile nicht unmittelbar gegenüberliegen, sind die Auslässe aller Ventile axial entlang des Sammelkanals voneinander beabstandet angeordnet.

Durch die Erfindung wird insbesondere ermöglicht, dass die Mitnehmer mit Antriebswellen der Motoren auf einer Achse liegen.

Dies ermöglicht ebenfalls einen einfachen und kompakten Aufbau. Die Verbindung zum jeweiligen Motor erfolgt vom Betätigungsorgan des Ventils gradlinig in Richtung des Motors, und zwar vorzugsweise senkrecht zu einer Haupterstreckungsrichtung des Ventilblocks. Es ist nicht erforderlich, dass z.B. über ein Getriebe die Motoren von der Seite her angekoppelt sind.

Es versteht sich aber, dass im Sinne der Erfindung der Motor selbst ein Getriebe umfassen kann. Insbesondere werden, wie es bei einer Ausführungsform der Erfindung vorgesehen ist, Motoren verwendet, welche ein Planetengetriebe aufweisen, das mit einem Elektromotor gekoppelt ist.

Hierdurch lassen sich auf kleinem Bauraum hohe Antriebskräfte und gleichzeitig eine genaue Bewegungssteuerung erreichen.

Die Motoren sind vorzugsweise über eine Elektronik lastüberwacht, das heißt, beim Blockieren eines Ventils wird dies erfasst und der Motor wird gestoppt.

Als Ventile werden gemäß einer Ausführungsform der Erfindung 3/3-Wegeventile mit einer gesperrten Stellung, vorzugsweise einer gesperrten Mittelstellung, verwendet.

Dies hat den Vorteil, dass für zwei Quellbehälter lediglich ein Ventil verwendet werden muss.

Weiter kann so ermöglicht werden, dass die Betätigungsorgane der Ventile, nicht aber die Zuläufe des Ventilblocks gegeneinander versetzt angeordnet sind.

Eine regelmäßige Anordnung der Zuläufe erleichtert es wiederum dem Benutzer, zu überprüfen, ob die richtigen Zuläufe angeschlossen sind.

Bei einer Ausführungsform der Erfindung sind die Mitnehmer über Klauenkupplungen mit den Motoren verbunden. Auf der Antriebswelle ist mithin eine Klauenkupplung eingebaut. Hierdurch werden insbesondere etwaige Toleranzen der Zentrierung der Motoren gegenüber den Mitnehmern korrigiert.

Es ist insbesondere vorgesehen, dass die Mitnehmer über die Antriebswellen bewegbar sind, wobei ein vorderer Abschnitt der Antriebswellen in einer oberhalb der Klauenkupplungen angeordneten Etage einer Antriebseinheit gelagert ist. Die Lagerung der Antriebswellen ist somit mitnehmerseitig von der Lagerung des Motors entkoppelt.

Motoren, Motorensteuerung sowie die Antriebswellen für die Mitnehmer werden vorzugsweise als modulare Antriebseinheit bereitgestellt.

Die Antriebseinheit ist vorzugsweise auf einer den Mitnehmern gegenüberliegenden Seite eines Gehäuses der Anlage angebracht.

So wird ein besonders einfacher und robuster Aufbau der Anlage ermöglicht. Die Mitnehmer können so beispielsweise auf einer Trägerplatte angeordnet sein, die auf einem Gehäuse der Anlage montiert ist oder Teil eines Gehäuseabschnitts ist.

Die Antriebseinheit kann an der Unterseite des Gehäuses montiert, insbesondere angeschraubt, werden. Vorzugsweise verfügen die Mitnehmer für die Ventile auf der Unterseite über Formschlusselemente. So werden die Mitnehmer für die Ventile über antriebswellenseitig vorhandene Mitnehmer der Antriebswelle der Motoren angetrieben.

Die Erfindung betrifft des Weiteren eine Anlage zur Herstellung einer medizinischen Zubereitung, insbesondere eine Anlage wie sie vorstehend beschrieben wurde und mit der aus einer Mehrzahl von Quellbehältern Flüssigkeiten in einen Zielbehälter transferierbar sind.

Die Anlage umfasst zumindest eine Pumpe und einen abnehmbaren Ventilblock mit einer Vielzahl von Ventilen.

Der Ventilblock ist vorzugsweise auf eine Trägerplatte des Gehäuses der Anlage aufrastbar.

Der Ventilblock umfasst eine Vielzahl von Ventilen, mittels derer der Zufluss aus den Quellbehältern steuerbar ist.

Gemäß der Erfindung sind die Ventile mittels Motoren betätigbar, wobei die Anlage eine Sensoreinheit zur Überwachung der jeweiligen Ventilsteuerung umfasst.

Zu Erhöhung der Sicherheit wird also durch die Anlage kontrolliert, ob sich ein Ventil in einer geöffneten oder geschlossenen Stellung befindet.

In einer Ausführungsform wird die Sensoreinheit gleichzeitig zur Steuerung der Motoren verwendet, mittels der die Ventile bewegt werden.

Werden beispielsweise 3/3-Wegeventile mit einer geschlossenen Mittelstellung verwendet, so wird das Ventil, ausgehend von einer geschlossenen Mittelstellung, durch etwa eine Viertelumdrehung, vorzugsweise etwa eine Achteldrehung, in die eine Richtung geöffnet, um einen ersten Zulauf zu öffnen. Bei einer Drehung in die andere Richtung wird ein anderer Zulauf geöffnet. Nach einer Viertelumdrehung ist das Ventil vollständig geöffnet und die Pumpe kann angeschaltet werden.

Die Sensoreinheit umfasst bei einer bevorzugten Ausführungsform eine Mehrzahl von Lichtschranken, in welche in Abhängigkeit von der Ventilstellung ein Finger greift.

Insbesondere werden etwa im Falle der Verwendung eines 3/3-Wegeventils mit geschlossener Mittelstellung drei Lichtschranken verwendet, wobei ein Finger in geschlossener Stellung in eine mittig angeordnete Lichtschranke greift und in den beiden Öffnungsstellungen jeweils in eine andere Lichtschranke. In einer anderen Ausführungsform werden die beiden nicht mittig angeordneten Lichtschranken betriebsmäßig nicht angefahren. Sie überwachen lediglich die Endlagen. Die beiden "offen"- Stellungen werden über die Motorensteuerung relativ zur mittleren Stellung, in der das Ventil geschlossen ist, angefahren.

Der Finger kann beliebig ausgestaltet sein. Es kann sich beispielsweise um ein hakenförmiges Bauelement handeln, welches von oben oder von unten in einen Zwischenraum greift, welcher die Lichtschranke bildet.

Bei einer Weiterbildung der Erfindung sind Sensoreinheiten sowohl auf der Oberseite eines Trägers, als auch auf der Unterseite eines Trägers angeordnet. Dies dient ebenfalls einem kompakten Aufbau der Anlage.

Aufgrund der nah beieinanderliegenden Ventile würden sich die Sensoreinheiten, je nachdem was für Sensoreinheiten verwendet werden, im Weg stehen, sofern man diese ebenfalls dicht an die Ventile bzw. deren Antriebswellen rückt.

Die Anordnung der Sensoreinheiten auf einer Oberseite und einer Unterseite des Trägers ermöglicht auf einfache Weise, dass die Sensoreinheiten auf zwei verschiedenen Ebenen angeordnet sein können, wodurch Bauraum gewonnen wird.

Der Träger ist insbesondere als Platine ausgebildet und dient somit sowohl der mechanischen Befestigung der Sensoreinheiten als auch deren elektrischer Versorgung.

### Kurzbeschreibung der Zeichnungen

Der Gegenstand der Erfindung soll im Folgenden Bezug nehmend auf die Zeichnungen Fig. 1 bis Fig. 13 anhand eines Ausführungsbeispiels näher erläutert werden.
Fig. 1 ist eine schematische Darstellung einer Anlage zur Herstellung einer medizinischen Zubereitung.
Fig. 2 und Fig. 3 sind perspektivische Detailansichten eines verwendeten Ventilblocks.
Fig. 4 ist eine perspektivische Ansicht des aufgeschnittenen Gehäuses des Ventilblocks gemäß Fig. 2 und Fig. 3
Fig. 5 ist eine Detailansicht einer Trägerplatte mit den Mitnehmern für die Ventile.
Fig. 6 und Fig. 7 sind perspektivische Ansichten der Antriebseinheit der Anlage.
Fig. 8 bis Fig. 10 sind Detaildarstellungen der Antriebseinheit.
Fig. 11 ist eine perspektivische Ansicht der Antriebswelle für die Mitnehmer nebst Motor.
Fig. 12 ist eine Draufsicht auf die Unterseite der Antriebseinheit.
Fig. 13 ist eine perspektivische Detaildarstellung der Oberseite der Antriebseinheit.

### Detaillierte Beschreibung der Zeichnungen

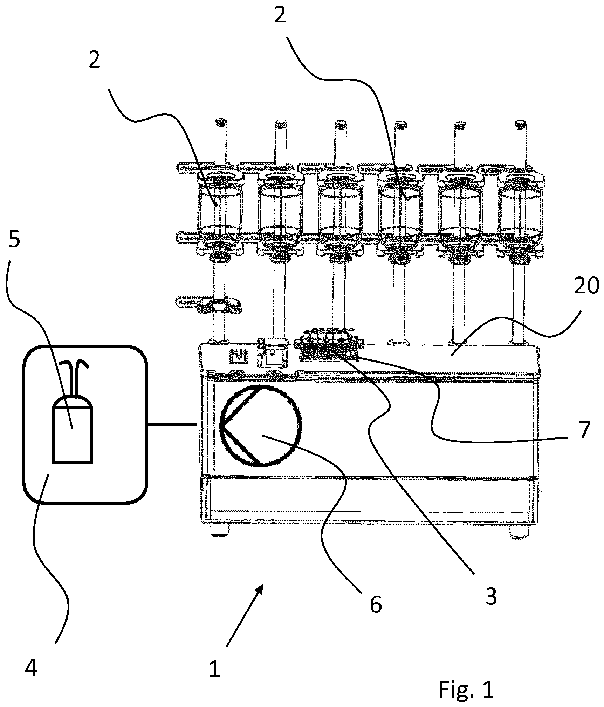

Fig. 1 zeigt eine schematische Ansicht einer Anlage 1 zur Herstellung einer medizinischen Zubereitung.

Die Anlage 1 ist insbesondere zum Anmischen von Zubereitungen zur parenteralen Ernährung ausgebildet. Mittels der Anlage werden beispielsweise Infusionsbeutel oder Spritzen befüllt.

Hierzu ist an der Anlage 1 eine Vielzahl von Quellbehältern 2 angeschlossen. Die hier dargestellten Quellbehälter 2 sind an einem Gestell aufgehängt. Weitere Quellbehälter, welche beispielsweise als Beutel ausgebildet sind und welche die Hauptbestandteile der Nahrungsmittelzusammensetzung enthalten, sind hier nicht dargestellt.

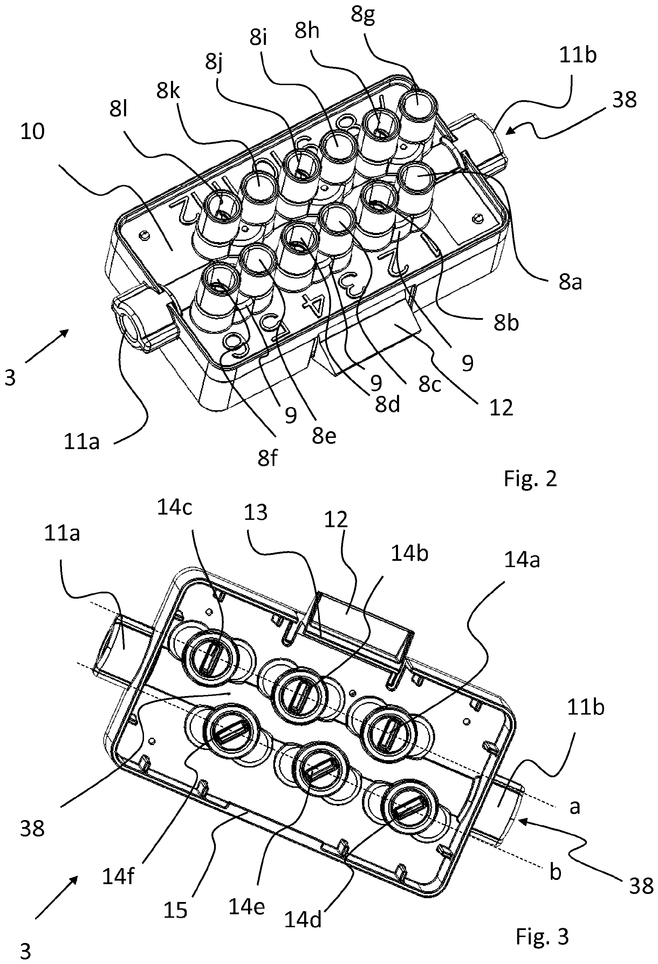

Die Anlage 1 umfasst einen Ventilblock 3, welcher Zuläufe 8a bis 8l aufweist (siehe dazu Fig. 2), die über Schläuche (nicht dargestellt) mit den Quellbehältern 2 verbunden werden. Die Schläuche umfassen hier beispielsweise einen Spike und/oder einen Luer-Lock-Anschluss, mittels welchem sie am jeweiligen Quellbehälter 2 angeschlossen werden.

Über die Betätigung eines Ventils 9 des Ventilblocks 3 wird jeweils ein Zulauf 8a bis 8l des Ventilblocks 3 mit einem Ablauf 11a, 11b des Ventilblocks 3 verbunden und die jeweilige Flüssigkeit kann mittels einer Pumpe 6 in einen Zielbehälter 5 transferiert werden (siehe dazu auch Fig. 2). Die hierfür verwendeten Schläuche sind nicht dargestellt.

Der Zielbehälter 5 ist auf einer Waage 4 angeordnet. Über die Waage 4 wird insbesondere kontrolliert, ob die gewünschte Menge an Flüssigkeit entnommen wurde.

Das Transferieren aus den verschiedenen Quellbehältern 2 und damit die Herstellung der medizinischen Zubereitung erfolgt computergesteuert.

In der Regel ist zeitgleich immer nur ein Ventil 9 des Ventilblocks 3 geöffnet, das heißt es wird immer aus genau einem Quellbehälter 2 Flüssigkeit entnommen.

Bei einem Transferieren kommt die von der Pumpe 6 gepumpte Flüssigkeit des Quellbehälters nicht sofort in dem Zielbehälter 5 an, da die Schläuche zunächst noch mit einer anderen Flüssigkeit gefüllt sind. Grundsätzlich kann, wenn man weitere Effekte außer Acht lässt, aber zunächst über die Waage 4 die Menge der entnommenen Flüssigkeit ermittelt werden, und zwar zumindest dann, wenn die Flüssigkeiten in den verschiedenen Quellbehältern 2 in etwa die gleichen Dichte haben.

In der Regel wird zum Abschluss des Befüllvorgangs ein neutrales Medium, wie beispielsweise Wasser, in den Zielbehälter 5 gepumpt, um sicher zu stellen, dass die gewünschten Nahrungsmittelbestandteile vollständig aus einem Schlauch, welcher die Ventileinheit 3 mit dem Zielbehälter 5 verbindet (nicht dargestellt), ausgetreten sind.

Vorzugsweise wird der Ventilblock 3 zusammen mit den hier nicht dargestellten Schläuchen zum Anschluss an die Quellbehälter 2 sowie an den Zielbehälter 5 als Einwegbauteil bereitgestellt bzw. verwendet. Der Ventilblock 3 ist vorzugsweise auf eine Trägerplatte 7 der Anlage 1 aufgerastet und kann vom Benutzer so leicht abgenommen werden.

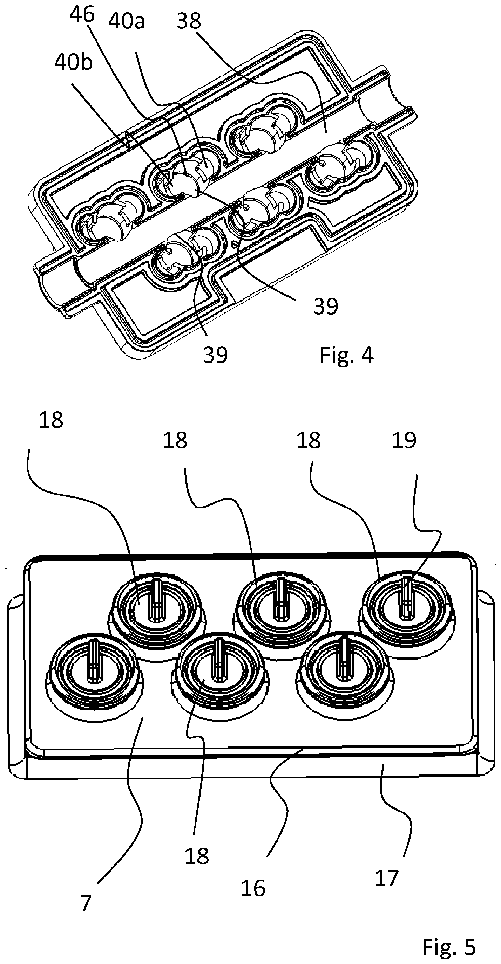

Hierzu umfasst das Gehäuse 20 der Anlage 1 eine Trägerplatte 7, welche dem Aufrasten des Ventilblocks 3 dient (siehe dazu auch Fig. 5).

Fig. 2 ist eine perspektivische Darstellung des Ventilblocks 3, in welcher die Oberseite des Ventilblocks 3 zu sehen ist.

Der Ventilblock 3 umfasst ein vorzugsweise im Wesentlichen quaderförmig ausgebildetes Gehäuse mit den Zuläufen 8a bis 8l. An den Zuläufen 8a bis 8l werden über hier nicht dargestellte Schläuche die Quellbehälter 2 angeschlossen.

Die Zuläufe 8a bis 8l sind vorzugsweise jeweils derart mit einem Schlauch verbunden, vorzugsweise verschweißt oder verklebt, dass dieser nicht zerstörungsfrei abgenommen werden kann.

Weiter umfasst der Ventilblock 10 Ventile 9, wobei jedes Ventil 9 zur Steuerung von zwei Zuläufen 8a-8l vorgesehen ist.

Die Erläuterung der Ausgestaltung eines Ventils 9 erfolgt anhand des Ventils 9 mit den Zuläufen 8a und 8b. Die anderen Ventile 9 sind vorzugsweise identisch ausgebildet.

In diesem Ausführungsbeispiel ist ein Ventil 9 für die Steuerung der Zuläufe 8a und 8b zuständig. Die Zuläufe 8a bis 8b überschneiden sich in der Draufsicht jeweils mit dem Gehäuse des Ventils 9.

Zu erkennen ist, dass die Ventile 9, die ein aus diesem Gehäuse 10 hervorstehendes Ventilgehäuse aufweisen, in zwei gegeneinander versetzt angeordneten geraden Reihen positioniert sind.

Die Zuläufe 8a bis 8l sind im Unterschied zu den Ventilen 9 nicht versetzt, sondern in den Reihen genau gegenüberliegend angeordnet.

Um jeweils zwei Zuläufe 8a-8l öffnen und schließen zu können, sind die Ventile 9 als 3/3-Wegeventile mit geschlossener Mittelstellung ausgebildet.

Weiter umfasst der Ventilblock 3 die Abläufe 11a und 11b, welche an zwei gegenüberliegenden Seiten des Gehäuses 10 angeordnet sind. Diese sind über einen vorzugsweise zentralen Kanal 38 miteinander verbunden.

Ein Schlauch, welcher mit dem Zielbehälter 5 verbunden wird (nicht dargestellt), kann entweder am Ablauf 11a oder am Ablauf 11b angeschlossen sein. Der nicht benötigte Ablauf kann verschlossen werden.

Weiter umfasst das Gehäuse 10 eine federnde Rastlasche 12. Diese ist als Griff ausgebildet. Wenn der Benutzer an der Rastlasche 12 zieht, kann der Ventilblock 3 von der Trägerplatte (7 in Fig. 1) der Anlage 1 abgenommen werden.

Fig. 3 ist eine perspektivische Ansicht auf die Unterseite des Ventilblocks 3. Zu erkennen ist, dass der Ventilblock 3 von unten zugängliche Betätigungsorgane, in diesem Ausführungsbeispiel in Form von Küken 14a-14f, umfasst. Die Küken 14a bis 14f sind in zwei Reihen angeordnet, welche gegeneinander versetzt angeordnet sind.

Hierzu sind, in der Draufsicht auf die Unterseite des Ventilblocks, die Küken 14a bis 14c auf der eingezeichneten virtuellen Geraden a und die Küken 14d bis 14f auf der virtuellen Geraden b angeordnet, wobei die Küken auf den sich gegenüberliegen Geraden jeweils versetzt zueinander angeordnet sind, dass beispielsweise das Küken 14e zwischen den gegenüberliegenden Küken 14a und 14b liegt.

Weiter liegen die Ventile 9 und damit auch die Küken 14a bis 14f entlang eines zentralen Kanals 38, welcher zum Ablauf 11a oder 11b des Ventilblocks 3 führt.

Die Betätigungsorgane, also die Küken 14a-14f, weisen ein Formschlusselement auf, welches mit dem Formschlusselement eines Mitnehmers 18 der Anlage 1 korrespondiert (siehe dazu auch Fig. 5). In dieser Ausführungsform ist dieses Formschlusselement als Schlitz ausgebildet. Über die anlagenseitigen Mitnehmer 18 werden die Küken 14a-14f betätigt und das jeweilige Ventil 9 wird geöffnet und geschlossen.

Ein Schlitz als Formschlusselement ist für die Küken besonders geeignet, da diese in diesem Ausführungsbeispiel aus einem Elastomer ausgebildet sind und in das Gehäuse des Ventilblocks eingepresst sind. Über einen Schlitz wird trotz des Elastomermaterials eine hinreichend stabile Verbindung von Mitnehmer und Küken 14a-14f bereitgestellt.

Weiter ist auf der Unterseite zu erkennen, dass die Rastlasche 12 einen Steg 13 aufweist, welcher in aufgerastetem Zustand unter den Rand 16 der Trägerplatte 7 greift (siehe dazu auch Fig. 5).

Ein dem Steg 13 gegenüberliegender Steg 15 des Gehäuses dient als Formschlusselement für den Ventilblock 3 auf der der Rastlasche 12 gegenüberliegenden Seite. Der Ventilblock 3 kann daher durch Ziehen an der Rastlasche 12 von einer Seite her abgenommen werden.

In dieser Darstellung sind die Ventile 9 mit den Küken 14a bis 14c in Mittelstellung und somit in geschlossener Position zu sehen. Zur Illustration sind die Ventile 9 mit den Küken 14d bis 14f gegenüber der geschlossenen Mittelstellung etwa um eine Achtelumdrehung gedreht. So ist jeweils ein Zulauf geöffnet. Es versteht sich, dass im Betrieb der Anlage 1 aber immer nur ein Ventil 9 geöffnet ist. Im Detail ist das Ventil 9 beispielsweise nur zu einem Zulauf 8a oder 8b geöffnet.

Fig. 4 ist eine perspektivische aufgeschnittene Ansicht des Gehäuses des Ventilblocks 3 ohne Küken 14a-14f.

Die Ausgestaltung der Ventile 9 wird am Beispiel eines Ventils 9 erläutert. Vorzugsweise sind sämtliche Ventile 9 identisch ausgebildet.

Zu erkennen ist, dass ein kreiszylinderförmiges Ventilgehäuse 46 die Zuflüsse 40a und 40b aufweist, durch die Flüssigkeit von jeweils einem Zulauf 8a-8l durch das Ventil 9 strömen kann, wenn das jeweilige Küken 14a-14f in einer geöffneten Stellung ist.

Weiter ist zu erkennen, dass jedes Ventil 9 einen Auslass 39 aufweist, welcher in den Sammelkanal 38 mündet.

Der Auslass 39 wird in diesem Ausführungsbeispiel dadurch gebildet, dass sich das kreiszylinderförmige Gehäuse des Ventils 9 mit dem Sammelkanal 38 in der Aufsicht überschneidet. Das Ventilgehäuse 46 mündet unmittelbar in den Sammelkanal 38.

Dadurch, dass die Ventile 9 versetzt zueinander angeordnet sind, sind sämtliche Auslässe 39 entlang des Sammelkanals 38 voneinander beabstandet und liegen sich in axialer Richtung nicht gegenüber.

Fig. 5 ist eine perspektivische Detaildarstellung der Trägerplatte 7 des Gehäuses 20 der Anlage 1.

Auf dieser Trägerplatte 7 wird der Ventilblock 3 verrastet.

Hierzu umfasst die Trägerplatte 7 einen Sockel 17. Ein Rand 16 der Trägerplatte 7 ragt über den Sockel 17 hervor. Der überstehende Rand 16 dient als Formschlusselement für die Rastlasche 12 und den Steg 13 des Ventilblocks 13, um diesen auf den Sockel 17 zu verrasten.

Aus der Trägerplatte 7 ragen die Mitnehmer 18 für die Betätigungsorgane der Ventile 9, also für die Küken 14a-14l, hervor.

Die Mitnehmer 18 sind auch gegeneinander versetzt in zwei Reihen nach dem Prinzip der hexagonal dichtesten Packung, aber voneinander beabstandet, angeordnet.

Die Mitnehmer 18 haben in diesem Ausführungsbeispiel einen stegförmigen Vorsprung 19 und sind ähnlich wie ein Schlitzschraubendreher ausgebildet. Die Vorsprünge 19 greifen in die Schlitze der Küken 14a-14f.

Die Trägerplatte 7 ist vorzugsweise von oben auf dem Gehäuse 20 der Anlage 1 montiert bzw. kann auch Teil des Gehäuses sein.

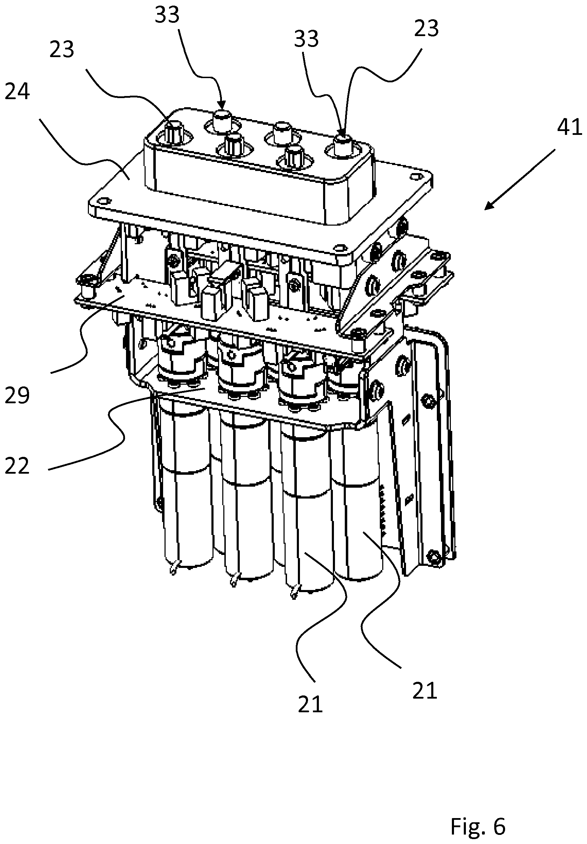

Fig. 6 zeigt eine perspektivische Ansicht der Antriebseinheit 41 für die Mitnehmer 18.

Die Antriebseinheit 41 ist als modulare Einheit ausgebildet. Sie umfasst ein Kopfteil 24, welches von unten unterhalb der Trägerplatte 7 an dem Gehäuse 20 der Anlage 1 montiert wird und an welchem die weiteren Komponenten der Antriebseinheit 41 befestigt sind.

Aus dem Kopfteil 24 ragen die Antriebswellen 23 für die Mitnehmer 18 heraus.

Das Ende der Antriebswelle 23 ist vorzugsweise ebenfalls als Mitnehmer ausgebildet und weist ein Formschlusselement für ein korrespondierendes Formschlusselement der Mitnehmer 18 für die Ventile 9 auf, mit welchem diese jeweils mit der Antriebswelle 23 verbunden werden.

An einem Träger 22 der Antriebseinheit 41 sind die Motoren 21 für den Antrieb der Ventile 9 montiert, welche ebenfalls in zwei gegeneinander versetzen Reihen entsprechend der Ventile 9 angeordnet sind. Zu erkennen ist, dass so die gesamte Antriebseinheit 41 besonders kompakt ausgebildet ist.

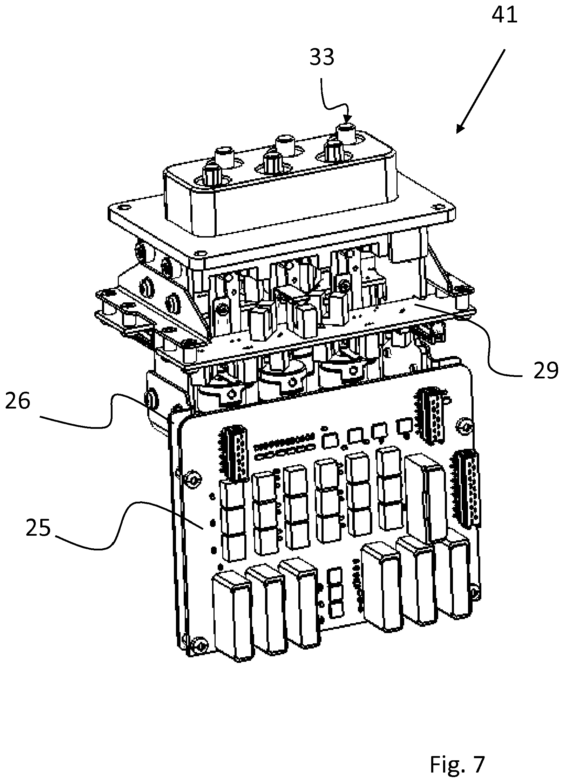

Fig. 7 ist eine weitere perspektivische Ansicht der Antriebseinheit 41, auf welcher die der in Fig. 6 dargestellten gegenüberliegende Seite der Antriebseinheit 41 zu sehen ist.

In dieser Ansicht ist zu erkennen, dass eine Platine 25, welche die Elektronik, Steuerung und Stromversorgung der Motoren umfasst, in einer vertikalen Ausrichtung an einem Träger 26 der Antriebseinheit 41 montiert ist, was ebenfalls zu einer kompakten Bauweise beiträgt.

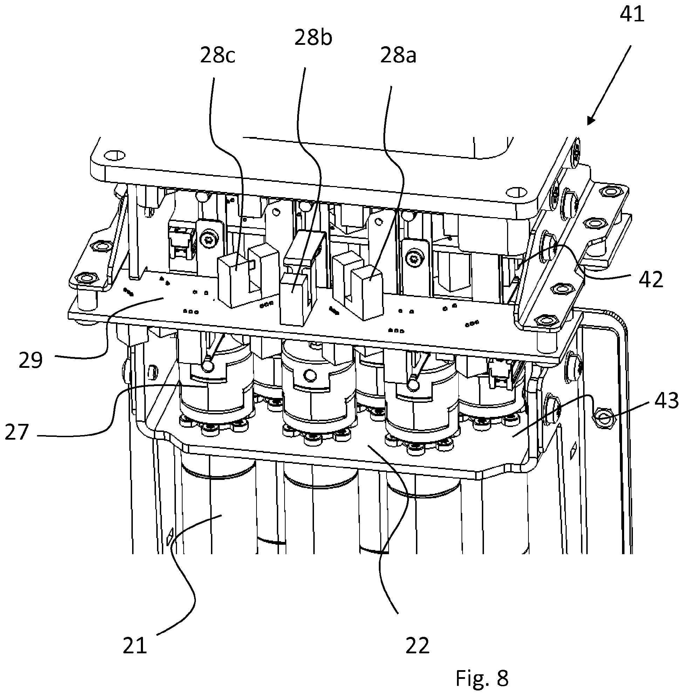

Fig. 8 ist eine perspektivische Detaildarstellung der in Fig. 6 dargestellten Antriebseinheit 41. In dieser Detaildarstellung ist zu erkennen, dass die modular ausgebildete Antriebseinheit 41 zwei Etagen 42, 43 umfasst.

An einem die untere Etage 43 abschließenden Träger 22 sind die Motoren 21 montiert. In der Etage 43 sind die Antriebswellen der Mitnehmer 18 über Klauenkupplungen 27 mit den Motoren 21 verbunden.

Die Lagerung der Antriebswellen 23 der Mitnehmer 18 ist so von der Lagerung der Motoren 21 entkoppelt.

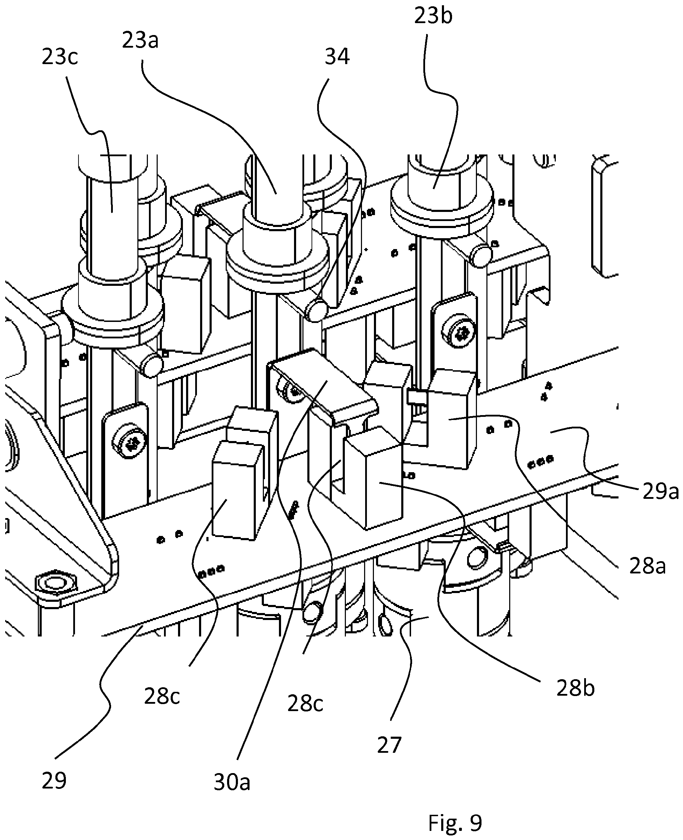

Fig. 9 zeigt eine weitere perspektivische Detaildarstellung, in der insbesondere die Sensoreinheiten der Antriebseinheit 41 zu erkennen sind.

Zu erkennen ist eine Antriebswelle 23a für einen Mitnehmer. Die Antriebswellen 32a-23c weisen einen seitlichen Vorsprung 34 auf, in diesem Ausführungsbeispiel ausgebildet als Stift, um zu verhindern, dass die Antriebswelle 23a um 180° verdreht eingebaut werden kann.

Weiter ist an der Antriebswelle 23a ein Finger 30a angebracht. Der Finger 30a greift je nach Ventilstellung in eine der um einen Viertelkreis herum angeordneten Lichtschranken 28a bis 28c.

Die Lichtschranken 28a bis 28c bilden eine Sensoreinheit.

Die Lichtschranken 28a bis 28c sind auf der Oberseite 29a eines Trägers 29 angeordnet, welcher als Platine ausgebildet ist und zumindest die Stromversorgung für die Lichtschranken 28a bis 28c bereitstellt.

Der hakenförmig ausgebildete Finger 30a der Antriebswelle 23a greift, je nach Ventilstellung, von oben in eine Öffnung der Lichtschranken 28a bis 28c.

Die Lichtschranken 28a bis 28c können der Überwachung der Ventilstellung und/oder der Steuerung der Motoren 21 dienen.

Der Finger 30a greift in die mittlere Lichtschranke 28b. In dieser Ansicht befindet sich das Ventil 9 in Mittelstellung, also in geschlossener Position.

Wie hier zu erkennen ist, ist auf der Oberseite 29a des Trägers 29 für die Antriebswellen 23b und 23c keine Sensoreinheit vorgesehen.

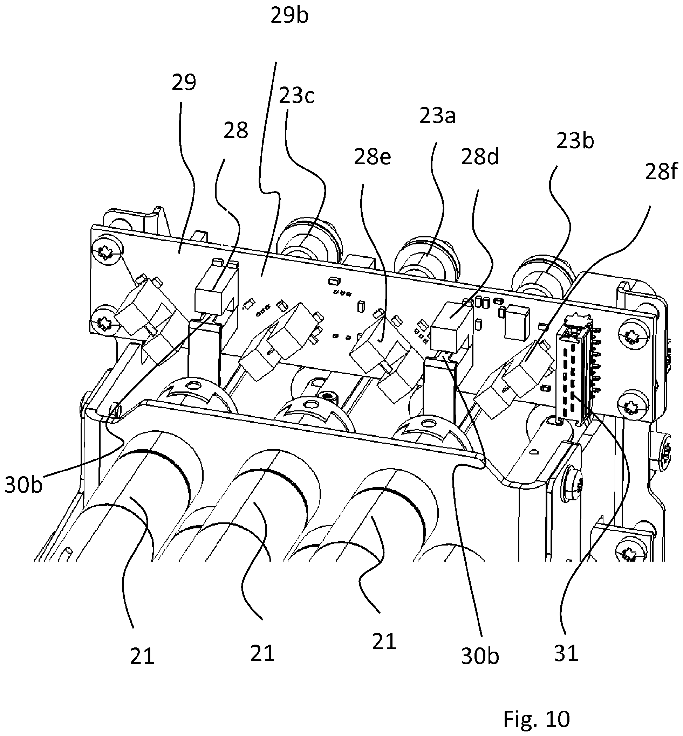

Die Sensoreinheiten für die Antriebswellen 23b und 23c sind in der perspektivischen Detaildarstellung gemäß Fig. 10 zu erkennen.

In dieser Ansicht ist die Unterseite 29b des Trägers 29 zu erkennen, auf welchem sich die Lichtschranken 28, 28d-28f, und damit die Sensoreinheiten für die Antriebswellen 23b und23 c befinden.

Hier greift der Finger 30b der Antriebswelle 23b, 23c, jeweils von unten in eine Lichtschranke 28, 28d.

Ansonsten korrespondiert der Aufbau der Sensoreinheit mit der in Fig. 9 dargestellten Sensoreinheit.

Durch die Aufteilung der Sensoreinheiten auf zwei Ebenen wurde ebenfalls eine kompaktere Ausgestaltung ermöglicht.

Weiter zu erkennen ist der Stecker 31, welcher dem elektrischen Anschluss des als Platine ausgebildeten Trägers 29 dient.

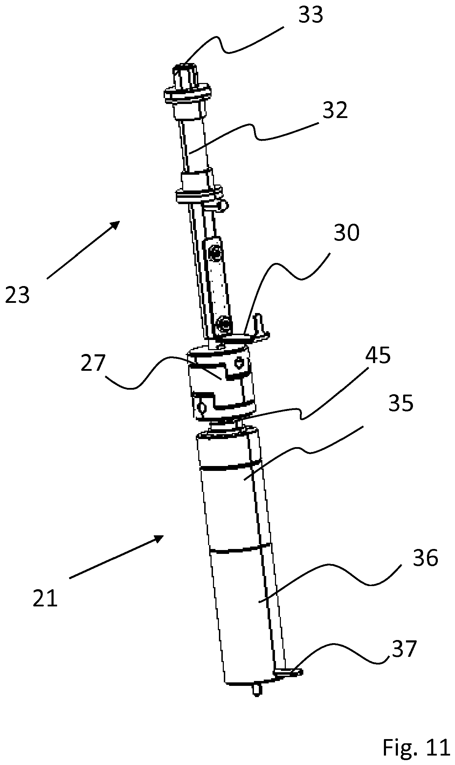

Fig. 11 ist eine perspektivische Ansicht einer Antriebswelle 23 nebst Motor 21. Die Antriebswelle 23 entspricht den zuvor dargestellten Antriebswellen 23b und 23c, bei denen der Finger 30b von unten die Lichtschranken 28, 28d-28f greift.

Antriebswelle 23 und Motor 21 sind auf einer Achse angeordnet.

Die Antriebswelle 23 umfasst einen vorderen Abschnitt 32, welcher separat in einer Etage 42 der Antriebseinheit 41 gelagert ist. Dieser vordere Abschnitt 32 umfasst einen Mitnehmer 33, um mit einen Mitnehmer 18 für ein Ventil 9 gekoppelt zu werden.

Unterhalb des vorderen Abschnitts 32 ist an der Antriebswelle 23 der Finger 30 zur Betätigung der Lichtschranken der Sensoreinheiten montiert.

Die Antriebswelle 23 ist über die Klauenkupplung 27 mit der Antriebswelle 45 des Motors 21 verbunden.

So ist die Lagerung des vorderen Abschnitts 32 derart von der Lagerung der Antriebswelle 45 des montierten Motors 21 entkoppelt, dass etwaige Toleranzen hinsichtlich der axialen Ausrichtung kompensiert werden.

Der Motor 21 umfasst als ersten Abschnitt einen Elektromotor 36, welcher über das Kabel 37 mit Strom versorgt wird.

Als zweiter Abschnitt ist über dem Elektromotor 36 ein Planetengetriebe 35 angeordnet, welches für ein hohes Übersetzungsverhältnis sorgt und damit eine präzise Steuerung der Ventile mit gleichzeitig hoher Kraft ermöglicht.

Die Motoren 21 sind lastüberwacht. Beim Blockieren eines Ventils 9 wird dies erfasst und der Motor 21 wird gestoppt. Über eine entsprechende Fehlermeldung wird der Benutzer der Anlage 1 informiert.

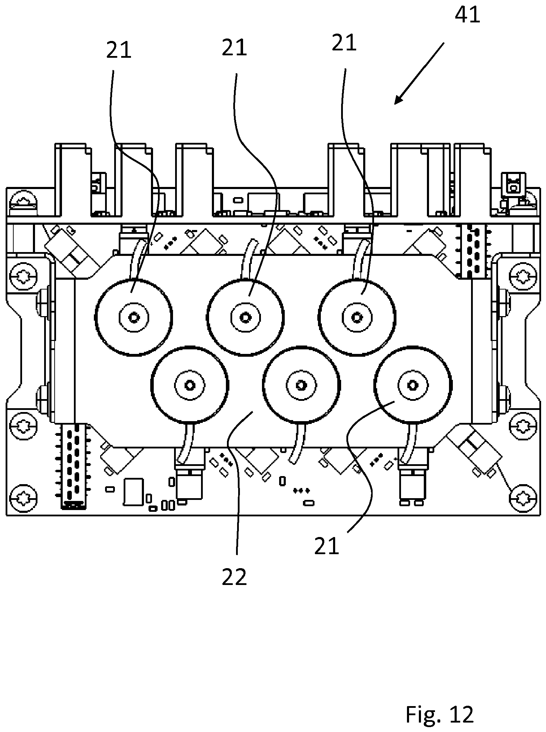

Fig. 12 ist eine Draufsicht auf die Unterseite der Antriebseinheit 41.

Gut zu erkennen ist, dass die Motoren 21 in zwei zueinander versetzten Reihen angeordnet sind. So greifen die Gehäuse der Motoren 21 entlang der Reihen ineinander, was einer kompakten Ausgestaltung sowohl der Antriebseinheit 41 als auch des mit der Antriebseinheit 41 verbundenen Ventilblocks 3 ermöglicht.

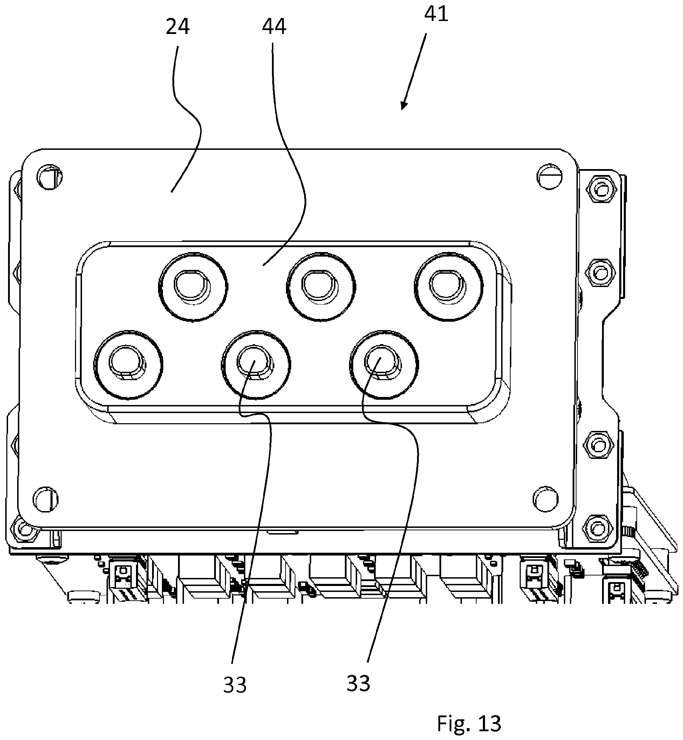

Fig. 13 ist eine perspektivische Detailansicht auf die Oberseite der Antriebseinheit 41.

Zu erkennen ist, dass das Kopfteil 24 der Antriebseinheit 41 einen hervorspringenden Sockel 44 umfasst.

Aus dem Sockel 44 ragen die Mitnehmer 33 der Antriebswellen 23 hervor, welche ihrerseits die Mitnehmer 18 für die Ventile 9 betätigen.

Zu erkennen ist, dass die Mitnehmer 33 in diesem Ausführungsbeispiel nockenartig ausgebildet sind, um mit einem entsprechenden Formschlusselement an der Unterseite des Mitnehmers 18 für das Ventil 9 zusammenzuwirken (nicht dargestellt).

Die modular ausgebildete Antriebseinheit 41 kann von unten an das Gehäuse 20 der Anlage 1 angeschraubt werden und die Trägerplatte 7 wird mit den Mitnehmern 18 für die Ventile 9 von oben auf dem Gehäuse 20 der Anlage 1 montiert.

Durch die Erfindung konnte eine zuverlässige, einfach und kompakt ausgebildete Anlage zur Herstellung von medizinischen Zubereitungen bereitgestellt werden.

### Bezugszeichenliste

- 1: Anlage
- 2: Quellbehälter
- 3: Ventilblock
- 4: Waage
- 5: Zielbehälter
- 6: Pumpe
- 7: Trägerplatte
- 8a: - 8l Zulauf
- 9: Ventil
- 10: Gehäuse
- 11a, 11b: Ablauf
- 12: Rastlasche
- 13: Steg
- 14a - 14f: Küken, Betätigungsorgan
- 15: Steg
- 16: Rand
- 17: Sockel
- 18: Mitnehmer
- 19: Vorsprung
- 20: Gehäuse
- 21: Motor
- 22: Träger
- 23, 23a - 23c: Antriebswelle
- 24: Kopfteil
- 25: Platine
- 26: Träger
- 27: Klauenkupplung
- 28, 28a - 28f: Lichtschranke
- 29: Träger
- 29a: Oberseite
- 29b: Unterseite
- 30, 30a, 30b: Finger
- 31: Stecker
- 32: vorderer Abschnitt
- 33: Mitnehmer
- 34: Vorsprung
- 35: Planetengetriebe
- 36: Elektromotor
- 37: Kabel
- 38: Sammelkanal
- 39: Auslass
- 40a, 40b: Einlass
- 41: Antriebseinheit
- 42: Etage
- 43: Etage
- 44: Sockel
- 45: Antriebswelle
- 46: Ventilgehäuse

## Patentansprüche

1. Anlage (1) zur Herstellung einer medizinischen Zubereitung, mit welcher aus einer Mehrzahl von Quellbehältern (2) Flüssigkeiten in einen Zielbehälter (5) transferierbar sind, wobei die Anlage (1) zumindest eine Pumpe (6) und eine Aufnahme für einen abnehmbaren Ventilblock (3) mit einer Vielzahl von Ventilen (9) umfasst, **dadurch gekennzeichnet, dass** mit den Ventilen (9) ein Zufluss aus den Quellbehältern (2) steuerbar ist, wobei die Ventile (9) Betätigungsorgane (14a-14f), insbesondere Küken (14a-14f), umfassen, wobei die Anlage (1) Mitnehmer (18) aufweist, über welche die Ventile (9) betätigbar sind, und wobei die Mitnehmer (18) gegeneinander versetzt in zumindest zwei Reihen (a, b) angeordnet sind.

2. Anlage (1) nach dem vorstehenden Anspruch, **dadurch gekennzeichnet, dass** die Mitnehmer (18) in zumindest zwei geraden Reihen (a, b) angeordnet sind, wobei die Mitnehmer (18) in einer Reihe (a) um etwa die Hälfte ihres jeweiligen Abstands gegenüber den Mitnehmern (18) der anderen Reihe (b) versetzt sind.

3. Anlage (1) nach einem der vorstehenden Ansprüche, **dadurch gekennzeichnet, dass** die Anlage (1) eine Antriebseinheit (41) mit Motoren (21) für die Mitnehmer (18) umfasst, wobei die Motoren (21) in zumindest zwei zueinander verschobenen Reihen angeordnet sind.

4. Anlage (1) nach dem vorstehenden Anspruch, **dadurch gekennzeichnet, dass** die Motoren (21) Gehäuse (20) umfassen, wobei entlang der Reihen die Gehäuse (20) der Motoren (21) ineinander greifend angeordnet sind.

5. Anlage (1) nach einem der vorstehenden Ansprüche, **dadurch gekennzeichnet, dass** die Mitnehmer (18) für den Antrieb der Ventile (9) über geradlinig verlaufende Antriebswellen (23) mit Antriebswellen (45) der Motoren (21) verbunden sind.

6. Anlage (1) nach einem der vorstehenden Ansprüche, **dadurch gekennzeichnet, dass** die Mitnehmer (18) über Klauenkupplungen (27) mit den Motoren (21) verbunden sind.

7. Anlage (1) nach dem vorstehenden Anspruch, **dadurch gekennzeichnet, dass** die Mitnehmer (18) über die Antriebswellen (23) bewegbar sind, wobei ein vorderer Abschnitt (32) der Antriebswellen in einer oberhalb der Klauenkupplungen (27) angeordneten Etage (42) einer Antriebseinheit (41) gelagert ist.

8. Anlage (1) nach einem der vorstehenden Ansprüche, **dadurch gekennzeichnet, dass** die Anlage (20) eine modulare Antriebseinheit (41) für die Mitnehmer (18) umfasst, welche auf einer den Mitnehmern (18) gegenüber liegenden Seite eines Gehäuse (20) der Anlage (1) angebracht ist.

9. Anlage (1) nach einem der vorstehenden Ansprüche, **dadurch gekennzeichnet, dass** die Motoren (21) der Anlage (1) lastüberwacht sind.

10. Anlage (1) nach einem der vorstehenden Ansprüche, **dadurch gekennzeichnet, dass** die Anlage eine Sensoreinheit (28, 28a-28c) zur Überwachung der jeweiligen Ventilstellung umfasst.

11. Anlage (1) nach dem vorstehenden Anspruch, **dadurch gekennzeichnet, dass** die Sensoreinheit (28, 28a-28c) eine Mehrzahl von Lichtschranken (28, 28a-28c)) umfasst, in welche in Abhängigkeit von der Ventilstellung ein Finger (30) greift.

12. Anlage (1) nach einem der beiden vorstehenden Ansprüche, **dadurch gekennzeichnet, dass** die Anlage (1) eine Mehrzahl von Sensoreinheiten (28, 28a-28c) umfasst, wobei die Sensoreinheiten (28, 28a-28c) sowohl auf der Oberseite eines Trägers (29), als auch auf der Unterseite eines Trägers (29), insbesondere einer Leiterplatte, angeordnet sind.

13. Ventilblock (3) zum Aufsetzen auf einer Anlage (1) zur Herstellung einer medizinischen Zubereitung nach einem der vorstehenden Ansprüche, wobei
der Ventilblock (3) eine Vielzahl von Ventilen (9) enthält, die Betätigungsorgane (14a-14f) umfassen, mit denen die Ventile (9) geöffnet und geschlossen werden können, und wobei
die Betätigungsorgane (14a-14f) der Ventile (9) über die Mitnehmer (18) der Anlage (1) betätigbar sind.

14. Ventilblock (3) nach dem vorstehenden Anspruch, **dadurch gekennzeichnet, dass** die Ventile (9) jeweils einen Auslass (39) zu einem Sammelkanal (38) haben, wobei die Auslässe (30) aller Ventile (9) entlang des Sammelkanals (38) in einer axialen Richtung des Sammelkanals (38) voneinander beabstandet angeordnet sind.

15. Ventilblock (3) nach einem der beiden vorstehenden Ansprüche, **dadurch gekennzeichnet, dass** die Ventile (9) als 3/3-Wegeventile mit einer gesperrten Mittelstellung ausgebildet sind.

## Claims

1. An installation (1) for producing a medical preparation, by way of which liquids from a plurality of source containers (2) can be transferred into a target container (5), wherein the installation (1) comprises at least one pump (6) and a receptacle for a removable valve block (3) having a multiplicity of valves (9), **characterized in that** an inflow from the source containers (2) can be controlled by the valves (9), wherein the valves (9) comprise activation members (14a- 14f), in particular plugs (14a-14f), wherein the installation (1) has drivers (18), by way of which the valves (9) can be activated, and wherein the drivers (18) are disposed so as to be mutually offset in at least two rows (a, b).

2. The installation (1) according to the preceding claim, **characterized in that** the drivers (18) are disposed in at least two straight rows (a, b), wherein the drivers (18) in one row (a) are offset by approximately half of the respective spacing of said drivers in relation to the drivers (18) of the other row (b).

3. The installation (1) according to any one of the preceding claims, **characterized in that** the installation (1) comprises a drive unit (41) having motors (21) for the drivers (18), wherein the motors (21) are disposed in at least two mutually displaced rows.

4. The installation (1) according to the preceding claim, **characterized in that** the motors (21) comprise housings (20), wherein the housings (20) of the motors (21) along the rows are disposed so as to be mutually engaging.

5. The installation (1) according to any one of the preceding claims, **characterized in that** the drivers (18) for driving the valves (9) are connected to drive shafts (45) of the motors (21) by way of drive shafts (23) that run in a linear manner.

6. The installation (1) according to any one of the preceding claims, **characterized in that** the drivers (18) are connected to the motors (21) by way of dog clutches (27).

7. The installation (1) according to the preceding claim, **characterized in that** the drivers (18) can be moved by way of the drive shafts (23), wherein a front portion (32) of the drive shafts is mounted in a level (42) of a drive unit (41) that is disposed above the dog clutches (27).

8. The installation (1) according to any one of the preceding claims, **characterized in that** the installation (20) comprises a modular drive unit (41) for the drivers (18), said drive unit being attached to a side of a housing (20) of the installation (1) that is opposite the drivers (18).

9. The installation (1) according to any one of the preceding claims, **characterized in that** the motors (21) of the installation (1) are monitored for load.

10. The installation (1) according to any one of the preceding claims, **characterized in that** the installation comprises a sensor unit (28, 28a-28c) for monitoring the respective valve position.

11. The installation (1) according to the preceding claim, **characterized in that** the sensor unit (28, 28a-28c) comprises a plurality of light barriers (28, 28a-28c), into which, depending on the valve position, a finger (30) reaches.

12. The installation (1) according to either of the two preceding claims, **characterized in that** the installation (1) comprises a plurality of sensor units (28, 28a-28c), wherein the sensor units (28, 28a-28c) are disposed on the upper side of a support (29), as well as on the lower side of a support (29), in particular of a printed circuit board.

13. A valve block (3) for placing onto an installation (1) for producing a medical preparation according to any one of the preceding claims, wherein
the valve block (3) contains a multiplicity of valves (9), which comprise activation members (14a-14f), by means of which the valves (9) can be opened and closed, and wherein
the activation members (14a-14f) of the valves (9) can be activated by the drivers (18) of the installation (1).

14. The valve block (3) according to the preceding claim, **characterized in that** the valves (9) have in each case one outlet (39) to a collection channel (38), wherein the outlets (30) of all valves (9) along the collection channel (38) are disposed so as to be mutually spaced apart in an axial direction of the collection channel (38).

15. The valve block (3) according to either of the two preceding claims, **characterized in that** the valves (9) are configured as 3/3-way valves having a blocked central position.

## Revendications

1. Installation (1) pour la production d'une préparation médicale, par le biais de laquelle des liquides d'une pluralité de contenants sources (2) peuvent être transférés dans un contenant cible (5), dans laquelle l'installation (1) comprend au moins une pompe (6) et un récipient pour un bloc de vannes amovibles (3) ayant une multiplicité de vannes (9), **caractérisée en ce qu'**un afflux des contenants sources (2) peut être contrôlé par les vannes (9), dans laquelle les vannes (9) comprennent des éléments d'activation (14a-14f), en particulier des bouchons (14a-14f), dans laquelle l'installation (1) a des éléments d'entraînement (18), par le biais desquels les vannes (9) peuvent être activées, et dans laquelle les éléments d'entraînement (18) sont disposés de manière à être mutuellement décalés sur au moins deux rangées (a, b).

2. Installation (1) selon la revendication précédente, **caractérisée en ce que** les éléments d'entraînement (18) sont disposés sur au moins deux rangées droites (a, b), dans laquelle les éléments d'entraînement (18) dans une rangée (a) sont décalés d'environ la moitié de l'espacement respectif desdits éléments d'entraînement par rapport aux éléments d'entraînement (18) de l'autre rangée (b).

3. Installation (1) selon l'une quelconque des revendications précédentes, **caractérisée en ce que** l'installation (1) comprend une unité de commande (41) ayant des moteurs (21) pour les éléments d'entraînement (18), dans laquelle les moteurs (21) sont disposés sur au moins deux rangées mutuellement déplacées.

4. Installation (1) selon la revendication précédente, **caractérisée en ce que** les moteurs (21) comprennent des logements (20), dans laquelle les logements (20) des moteurs (21) le long des rangées sont disposés de manière à s'engager mutuellement.

5. Installation (1) selon l'une quelconque des revendications précédentes, **caractérisée en ce que** les éléments d'entraînement (18) pour commander les vannes (9) sont raccordés à des arbres de commande (45) des moteurs (21) par le biais d'arbres de commande (23) qui fonctionnent de manière linéaire.

6. Installation (1) selon l'une quelconque des revendications précédentes, **caractérisée en ce que** les éléments d'entraînement (18) sont raccordés aux moteurs (21) par le biais d'embrayages à crabots (27).

7. Installation (1) selon la revendication précédente, **caractérisée en ce que** les éléments d'entraînement (18) peuvent être déplacés par le biais des arbres de commande (23), dans laquelle une partie avant (32) des arbres de commande est montée dans un niveau (42) d'une unité de commande (41) qui est disposé au-dessus des embrayages à crabots (27).

8. Installation (1) selon l'une quelconque des revendications précédentes, **caractérisée en ce que** l'installation (20) comprend une unité de commande modulaire (41) pour les éléments d'entraînement (18), ladite unité de commande étant fixée à un côté d'un logement (20) de l'installation (1) qui est opposé aux éléments d'entraînement (18).

9. Installation (1) selon l'une quelconque des revendications précédentes, **caractérisée en ce que** les moteurs (21) de l'installation (1) sont sous surveillance de charge.

10. Installation (1) selon l'une quelconque des revendications précédentes, **caractérisée en ce que** l'installation comprend une unité de détection (28, 28a-28c) pour surveiller la position des vannes respectives.

11. Installation (1) selon la revendication précédente, **caractérisée en ce que** l'unité de détection (28, 28a-28c) comprend une pluralité de barrières lumineuses (28, 28a-28c), auxquelles, en fonction de la position des vannes, un doigt (30) accède.

12. Installation (1) selon l'une ou l'autre des deux revendications précédentes, **caractérisée en ce que** l'installation (1) comprend une pluralité d'unités de détection (28, 28a-28c), dans laquelle les unités de détection (28, 28a-28c) sont disposées sur le côté supérieur d'un support (29), ainsi que sur la face inférieure d'un support (29), en particulier d'une carte de circuit imprimé.

13. Bloc de vannes (3) à placer sur une installation (1) pour produire une préparation médicale selon l'une quelconque des revendications précédentes, dans lequel
le bloc de vannes (3) contient une multiplicité de vannes (9), qui comprennent des éléments d'activation (14a-14f), au moyen desquels les vannes (9) peuvent être ouvertes et fermées, et dans lequel
les éléments d'activation (14a-14f) des vannes (9) peuvent être activés par les éléments d'entraînement (18) de l'installation (1).

14. Bloc de vannes (3) selon la revendication précédente, **caractérisé en ce que** les vannes (9) ont à chaque fois une sortie (39) vers un conduit de collecte (38), dans lequel les sorties (30) de toutes les vannes (9) le long du conduit de collecte (38) sont disposées de manière à être mutuellement espacées dans une direction axiale du conduit de collecte (38).

15. Bloc de vannes (3) selon l'une ou l'autre des deux revendications précédentes, **caractérisé en ce que** les vannes (9) sont configurées comme des vannes 3/3 voies ayant une position centrale bloquée.
